# EUROPÄISCHE PATENTSCHRIFT

(11) **EP 1 251 416 B1**
(45) Veröffentlichungstag und Bekanntmachung des Hinweises auf die Patenterteilung: **17.08.2005**
(21) Anmeldenummer: 02002510.2
(22) Anmeldetag: 02.02.2002
(51) Int. Cl.: G05B 23/02

(54) **Diagnose-Einrichtung für einen Feldbus mit steuerungsunabhängiger Informationsübermittlung**
Diagnostic device for a field-bus with control independent information transfer
Dispositif de diagnostic pour un dispositif de terrain avec transmission des informations de manière indépendante de la commande

(30) Priorität: 19.04.2001 DE 10119151
(43) Veröffentlichungstag der Anmeldung: 23.10.2002
(73) Patentinhaber: Phoenix Contact GmbH & Co. KG, 32825 Blomberg (DE)
(72) Erfinder: Schönherr, Dietmar, Dipl.-Ing., 32657 Lemgo (DE); Deuter, Andreas, Dipl.-Ing., 32825 Blomberg (DE)

(56) Entgegenhaltungen:
- EP-A- 0 964 325
- EP-A- 0 965 897
- EP-A- 1 079 287
- GB-A- 2 347 232
- US-A- 5 552 699

## Beschreibung

Die Erfindung betrifft eine Diagnose-Einrichtung für einen Feldbus, welches feldbusspezifische Diagnoseinformationen und Parameter, sowie auszugsweise Informationen über Peripherieeigenschaften auf eine Anzeigevorrichtung zur Anzeige und Auswertung ausgibt.

### Stand der Technik

Mit der fortschreitenden Verbreitung von Feldbussystemen in Steuerungssystemen bekommen Tools zur rationellen Inbetriebnahme und Wartung solcher Feldbussysteme eine immer größere Bedeutung. Aus dem Fachartikel "Elektronik Praxis Nr. 23, S.108 - 110" ist eine Diagnose-Einrichtung für einen Feldbus bekannt. Die darin beschriebene Diagnose-Einrichtung erfüllt die Aufgabe, Diagnosedaten für einen Feldbus als Klartextmeldung oder beispielsweise als Histogramm für Langzeitanalysen als visualisierte Darstellung bereitzustellen. Inhaltlich wird die Lokalisierung von Fehlerorten bei sporadisch auftretenden Übertragungsfehlern, Überwachung der Leitungsqualität von LWL-Strecken und Meldungen von Busmodulen über deren Peripheriestörungen angezeigt. Der entscheidende Nachteil ist jedoch, daß die logische und physikalische Verbindung zwischen der Feldbus-Anschaltbaugruppe und der Diagnose-Einrichtung über eine dafür eigens vorgesehene Schnittstellenverbindung zwischen Feldbus-Anschaltbaugruppe und PC mit Diagnose-Einrichtung, beispielsweise Ethernet oder V24, erfolgt.

Aus DE 299 13 057 U1 ist ein Visualisierungssystem bekannt, welches für die logische und physikalische Verbindung zwischen der SPS und einer Visualisierungsanwendung eine dafür vorgesehene Schnittstelle (beispielsweise V24 oder Ethernet) benutzt. Für zusätzliche an die SPS angeschlossene Feldbus-Anschaltbaugruppen muß zur Übertragung der in der Feldbus-Anschaltbaugruppe befindlichen Diagnosedaten die in der Feldbus-Anschaltbaugruppe befindlichen Schnittstelle verwendet werden, ein Durchreichen der Diagnoseinformationen innerhalb der SPS zur Diagnose-Einrichtung ist nicht möglich.

Aus "Inside OLE Second Edition, Kraig Brockschmidt, Microsoft Press, 1985" und "ActiveX Controls Inside Out, Adam Denning, Microsoft Press, 1987" ist die standardisierte Softwareschnittstelle für ActiveX Komponenten bekannt.

In "Elektro Automation, 3/2001, Seite 32" ist der typische Mechanismus der Datenübermittlung für eine Diagnose-Einrichtung für einen Feldbus beschrieben und skizziert. Hier ist innerhalb der Steuerung Programmieraufwand notwendig, um die Daten innerhalb der Steuerung zur einer Diagnose-Einrichtung zu übermitteln.

Um aufwendige Programmierungen entfallen zu lassen, wird die Diagnose-Einrichtung als ActiveX-Softwarekomponente in eine Visualierungs-Anwendung integriert. Da die Datenübermittlung der Diagnosedaten vom Feldbus zur Diagnose-Einrichtung nicht mehr über Steuerung erfolgt, ist hierfür eine zusätzliche Schnittstellenverbindung notwendig.

Aus DE 100 08 020 A1 ist eine Diagnosevorrichtung in einem Prozesssteuersystem bekannt. Hier werden aber nur Mess- und Regelgrößen aus der Anwendung überwacht und im Fehlerfall Maßnahmen ergriffen oder zur Anzeige gebracht. Die Diagnosevorrichtung ist in DE 100 08 020 A1 ist Bestandteil der Steuerungsvorrichtung, da die Ausführung des Steuerungsprogramms von der Diagnosevorrichtung beeinflußt wird. Die hier beschriebene Diagnosevorrichtung hat den entscheidenden Nachteil, daß sie keine Überwachung der Funktion eines Feldbusses bzw. Prozesssteuernetzes vornimmt.

### Aufgabenstellung

Der Erfindung liegt die Aufgabe zugrunde, eine Diagnose-Einrichtung zu schaffen, welche in eine übergeordnete Anwendung eingefügt werden kann, beispielsweise als ActiveX Komponente mit der standardisierten Softwareschnittstelle. Die übergeordnete Anwendung kann eine Visualisierung der Steuerungsanwendung oder eine Visualisierung auf Leitebene sein. Die Diagnose-Einrichtung erhält die Diagnose-Informationen für den Feldbus aus der Feldbus-Anschaltbaugruppe. Die Übertragung der

Diagnose-Informationen erfolgt über den SPS-I/O-Bus und die in der SPS vorhandenen Schnittstelle. Sowohl die Steuerungsanwendung als auch die Visualisierungsanwendung sind von der Übertragung der Diagnose-Informationen für den Feldbus nicht betroffen und dürfen bei der Programmierung und Anwendung nicht berücksichtigt werden. Da für die Übertragung der Diagnose-Informationen zwischen der Feldbus-Anschaltbaugruppe und der Diagnose-Einrichtung keine zusätzliche Schnittstellenverbindung vorgesehen ist, wird der interne SPS-I/O-Bus, die externe Schnittstelle der SPS und die externe Schnittstelle im PC verwendet.

### Lösung der Aufgabe

Die Aufgabe wird erfindungsgemäß durch die im Anspruch 1 aufgeführten Merkmale gelöst. Die erfindungsgemäße Diagnose-Einrichtung für einen Feldbus ist eine Softwarekomponente, welche in einer übergeordneten Anwendung über eine standardisierte Softwareschnittstelle integriert ist und darüber zu starten ist. Vorzugsweise ist die Diagnose-Einrichtung als ActiveX-Komponente mit der dafür vorgesehenen standardisierten Softwareschnittstelle realisiert. Mit ActiveX-Komponente wird eine in eine Hauptanwendung integrierbare Softwarekomponente mit einer standardisierten Softwareschnittstelle zur Hauptanwendung bezeichnet. Die ActiveX-Komponente wird vor dem Start oder während der Laufzeit der Hauptanwendung zu dieser hinzugefügt.

Die Datenübermittlung der Diagnose-Informationen von der externen Schnittstelle des PC zur Diagnose-Einrichtung innerhalb des PCs nimmt das Interface auf dem PC vor. In der SPS erfolgt die Datenübermittlung der Diagnose-Informationen von der Feldbus-Anschaltbaugruppe zur externen Schnittstelle der SPS über das Interface in der SPS. In der SPS sind für die Steuerungs-Anwendung keine Anpassungen oder Programmierungen für den Betrieb der Diagnose-Einrichtung notwendig. In der Visualisierungsanwendung auf dem PC sind für Datenübertragung der für den Betrieb der Diagnose-Einrichtung notwendigen Diagnose-Informationen keine Anpassungen oder Programmierungen notwendig.

Im folgenden wird die Erfindung anhand eines Ausführungsbeispiels und den dazugehörigen Figuren beschrieben.

### Bezugszeichenliste

1: Speicheprogrammierbare Steuerung SPS
2: Interface in der SPS
3: Steuerungs-Anwendung, SPS-Programm
4: Feldbus-Anschaltbaugruppe, zentrale Einheit für das Feldbussystem
5: I/O-Einheiten, Eingabe- oder Ausgabeeinheiten für die SPS
6: SPS-I/O-Bus, interner Bus der SPS oder SPS-Erweiterungsbus
7: Externe Schnittstelle der SPS
8: logische I/O Schnittstelle der Busanschaltung an den SPS-I/O-Bus
9: externe Schnittstelle der Busanschaltung
10: Anzeigevorrichtung, PC für steuerungsspezifische Visualisierungsanwendung
11: Diagnose-Vorrichtung für einen Feldbus
12: Interface im PC
13: Visualisierungsanwendung, Softwarekomponente
14: Diagnosedaten für einen Feldbus, übertragen über den SPS-I/O-Bus
15: PC-interne logische Verbindung zwischen der PC-Schnittstelle und dem Diagnose-Vorrichtung für einen Feldbus
16: SPS-interne logische Verbindung zwischen Steuerungsanwendung und der externen Schnittstelle der SPS
17: externe Schnittstelle des PC
18: Datenverbindung zwischen SPS und PC
19: Verbindung für Diagnose-Informationen für einen Feldbus
20: Datenverbindung zwischen SPS und PC
21: Feldbus-Leitung (schematisch)
22: Feldbus-Knoten, zum Anschalten von mehreren unterlagerten Busmodulen
23: Busmodule, enthalten Eingänge und Ausgänge für die Steuerungsanwendung
24: Störstelle im Feldbus
25: Busmodul
26: Busmodul hinter der Störstelle
27: Feldbus
28: Softwareschnittstelle für ActiveX-Komponente

### Überschrift der Figuren

Fig. 1: zeigt die erfindungsgemäße Diagnose-Einrichtung für einen Feldbus, welches die Diagnose-Informationen über die in der SPS vorhandene externe Schnittstelle erhält

Fig. 2: zeigt beispielhaft eine Feldbusanordnung.

Fig. 3: zeigt eine Diagnose-Einrichtung für einen Feldbus, wie sie bereits als Stand der Technik bekannt ist.

### Ausführungsbeispiel

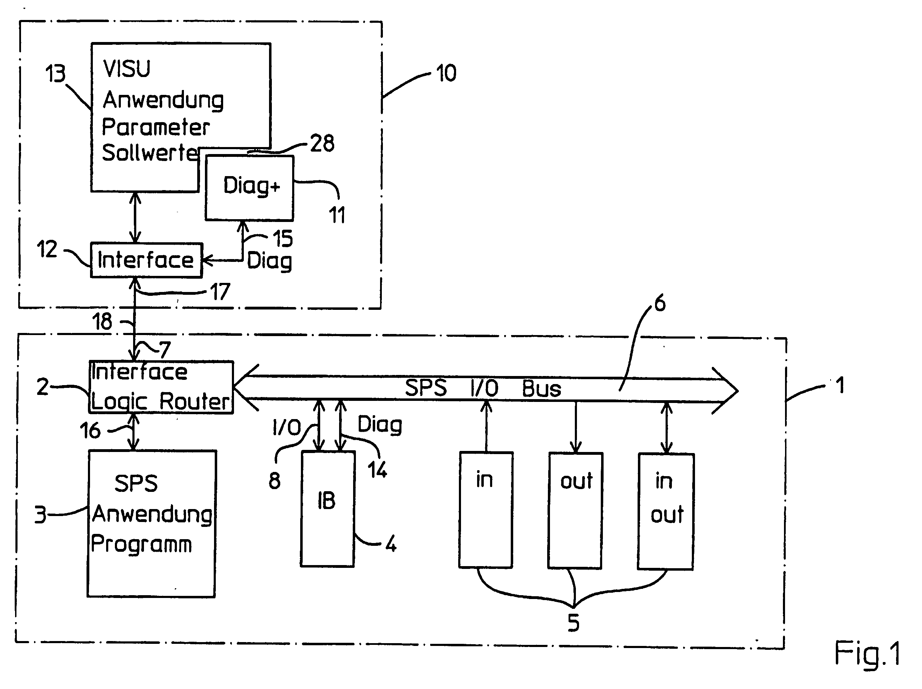

In **FIG. 1** ist die erfindungsgemäße Anordnung einer Diagnose-Einrichtung mit einer Diagnose-Vorrichtung **11** für einen Feldbus dargestellt. Die feldbusspezifischen Diagnose-Informationen sind in der Feldbus-Anschaltbaugruppe **4** für die Weiterverarbeitung in der Diagnose-Vorrichtung **11** abgespeichert. Die Feldbus-Anschaltbaugruppe **4** ist mit seiner I/O-Schnittstelle **8** an den in der SPS **1** befindlichen SPS-I/O Bus **6** angekoppelt, so daß die Feldbus-Anschaltbaugruppe **4** in gleicher Weise von der Steuerungs-Anwendung **3** angesprochen werden kann, wie die I/O-Einheiten **5.** Häufig ist an der SPS **1** eine Anzeigevorrichtung **10** angeschlossen, welche eine zur Steuerungs-Anwendung **3** zugehörige Visualisierungsanwendung **13** enthält. Über die Datenverbindung **18** zwischen der externen Schnittstelle der SPS **7** und der externen Schnittstelle des PCs **17** werden alle notwendigen Informationen übertragen. Als zusätzliche Komponente wird die Diagnose-Vorrichtung **11** in der Anzeigevorrichtung **10** aktiviert, die die Feldbus betreffenden Diagnose-Informationen zur Weiterverarbeitung oder zur anzeigenden Ausgabe erhält. Damit die Übermittlung der Diagnose-Informationen von der Feldbus-Anschaltbaugruppe **4** zur Diagnose-Vorrichtung **11** ohne Anpassung oder Programmierung der Steuerungsanwendung oder Visualisierungsanwendung erfolgen kann, sorgen Interfaces **2, 12** für die entsprechende Datenzuordnung. Über die Softwareschnittstelle **28** erfolgt die Bedienung der Diagnose-Vorrichtung **11** aus der Visualisierungsanwendung heraus, Rückmeldungen aus der Diagnose-Vorrichtung **11** erfolgen ebenfalls über diese Softwareschnittstelle **28** zur Visualisierungsanwendung **10.**

Im folgenden wird die Übermittlung der Diagnose-Informationen von der Feldbus-Anschaltbaugruppe **4** zur Diagnose-Vorrichtung **11** beschrieben. Die in der Feldbus-Anschaltbaugruppe **4** vorgehaltenen den Feldbus betreffenden Diagnose-Informationen werden über den SPS-I/O-Bus **6** zu dem Interface in der SPS **2** übertragen. Die Verbindung **14** für die Diagnose-Informationen zwischen der Feldbus-Anschaltbaugruppe **4** und dem SPS-I/O-Bus **6** ist für den SPS-I/O-Bus **6** angepasst und kann auch ausschließlich logischen Charakter haben. Über den SPS-I/O-Bus **6** werden sowohl I/O-Daten als auch Diagnose-Informationen für den Feldbus zum Interface in der SPS **2** übertragen. Das Interface in der SPS **2** schaltet die logischen Verbindungen. Die Diagnose-Informationen werden zur externen Schnittstelle der SPS **7** geleitet. Die I/O-Daten werden über die interne logische Verbindung **25** zur Steuerungs-Anwendung **3** geleitet. Visualisierungsinformationen gelangen aus der Steuerungs-Anwendung **3** über die interne logische Verbindung **16** zum Interface der SPS **2,** welches diese zur externen Schnittstelle **7** der SPS **1** leitet. Die externe Schnittstelle **7** der SPS **1** kann eine V24-Schnittstelle oder eine Ethernet-Schnittstelle oder eine Schnittstelle für ein andere Übertragungsart, wie Parallelübertragung sein.
In der Anzeigevorrichtung **10** mit der Visualisierungsanwendung **13** werden die über die externe Schnittstelle **17** im PC **10** Visualisierungsinformationen und Diagnose-Informationen für den Feldbus empfangen. Das Interface **12** im PC **10** lenkt die empfangenen Informationen ihrer Zugehörigkeit entsprechend entweder an die Visualisierungsanwendung **13** oder an die Diagnose-Vorrichtung **11** weiter. Visualisierungs-Informationen werden zur Visualisierungsanwendung **13** geleitet, Diagnose-Informationen werden über den internen logischen Kanal **15** zur Diagnose-Vorrichtung **11** geleitet. Die Visualisierungsanwendung **13** wird dabei in seiner funktionalen Eigenschaft nicht beeinflusst. Das Schalten aller logischen Verbindungen geschieht in umgekehrter Richtung ebenfalls, so dass aus der Diagnose-Vorrichtung **11** an die Feldbus-Anschaltbaugruppe **4** Befehle und Parameter über die Datenverbindung **18** und dem SPS-I/O-Bus **6** übertragen werden können. Aus der Visualisierungsanwendung **13** können Parameter oder Programme für die Steuerungs-Anwendung **3** zur SPS **1** über die Datenverbindung **18** übertragen werden. Selbstverständlich kann die Anwendung **13** auf dem PC auch eine Programmieranwendung für die SPS oder eine Konfigurationsanwendung oder Programmieranwendung für den Feldbus sein. Das Interface **12** im PC **10** kann aus einer Software-programmierbaren Datenverarbeitungseinheit oder aus einer in Hardware ausgeführten Komponente bestehen.

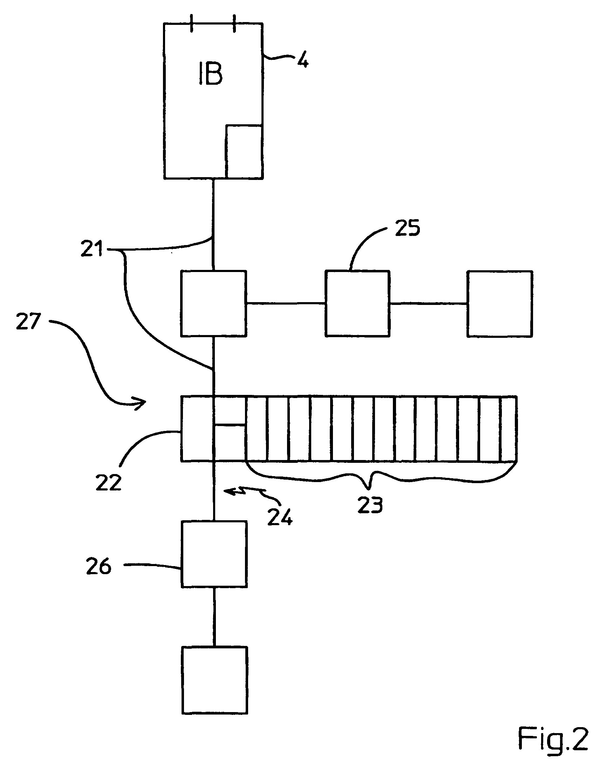

In **Fig. 2** ist beispielhaft ein an der Feldbus-Anschaltbaugruppe **4** angeschlossener Feldbus **27** dargestellt. Hierbei handelt es sich beispielsweise um ein INTERBUS-System, wobei es jedoch auch um ein anderes Feldbussystem handeln kann. Typischerweise enthält der Feldbus **27** Busleitungen **21** und daran angeschlossene Module **23, 25, 26,** welche Peripheriebeschaltungen aufweisen als Verbindung zu Sensoren oder Aktoren oder sonstigen Einrichtungen der Automatisierungstechnik. Eine Busklemme **22** ist nur beispielhaft für das INTERBUS-System zur Ankopplung mehrerer Busmodule **23** als funktionale Gruppierung dargestellt. Eine Störung **24** auf der Verbindungsleitung vor dem Modul **26** erzeugt einen Fehler, der in der Feldbus-Anschaltbaugruppe **4** mit möglichst weit umfassendem Informationsgehalt (Fehlerart, -dauer, -ort, usw.) gespeichert wird.

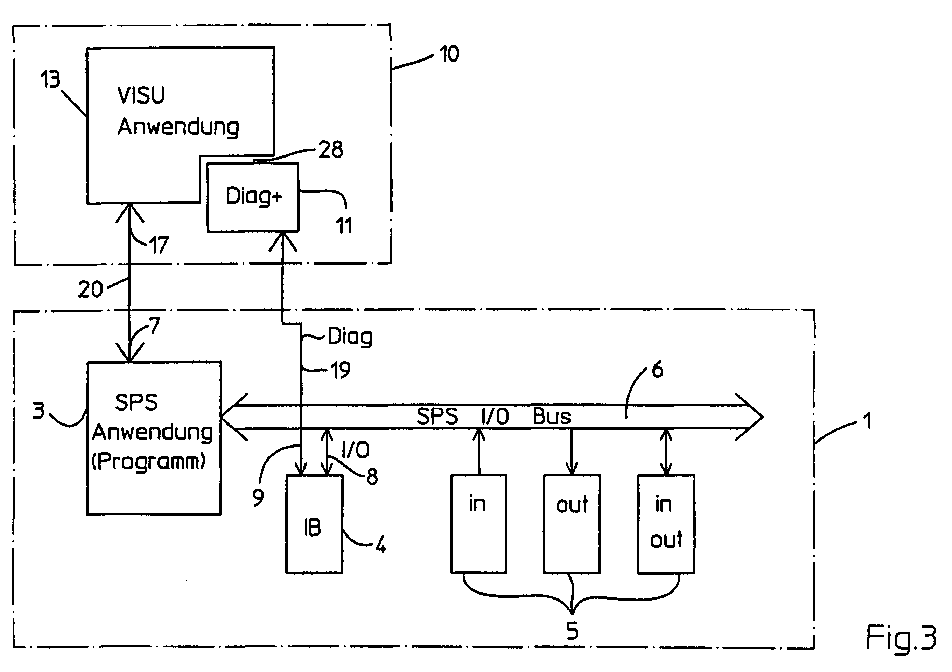

In **Fig. 3** ist eine Diagnose-Vorrichtung **21** dargestellt, wie es nach bekannter Art und Weise seine Diagnose-Informationen erhält. Eine eigens hierfür vorgesehene physikalische Verbindung **19** transportiert die Diagnose-Informationen zur Diagnose-Vorrichtung **11.** In umgekehrter Richtung können aus der Diagnose-Vorrichtung **11** an die Feldbus-Anschaltbaugruppe **4** Befehle und Parameter zum Busbetrieb gesendet werden. Der SPS.I/O-Bus **6** enthält nur I/O-Daten, so daß die Steuerungsanwendung **3** diese Daten direkt erhalten kann. Über die Datenverbindung **20** zwischen den Schnittstellen **7** und **17** werden von der Steuerungsanwendung **3** nur Visualisierungsinformationen oder sonstige steuerungsspezifische Daten übertragen und in umgekehrter Richtung werden von der Visualisierungsanwendung **13** nur steuerungsspezifische Parameter oder Programme für die Steuerungsanwendung **3** übertragen.

## Patentansprüche

1. Diagnose-Einrichtung für einen über eine Schnittstelle (14, 8) an einen in einer SPS (1) befindlichen SPS-I/O Bus (6) angekoppelten Feldbus-Anschaltbaugruppe (4) angeschlossenen Feldbus (27), welches feldbusspezifische Diagnose-Informationen wie beispielsweise Einzel-Übertragungsfehler, dauernd anstehende Unterbrechung mit Ortsangabe, Leitungsqualität von LWL-Strecken, sowie weitere für den Feldbus relevanten Diagnose-Informationen zur Anzeige auf einer Anzeigevorrichtung (10) ausgibt,
**dadurch gekennzeichnet,**
**dass** die Diagnose-Einrichtung
- eine Diagnose-Vorrichtung (11) für die Anzeige der feldbusspezifischen Diagnose-Informationen auf der Anzeigevorrichtung (19),
- ein Interface (12) in der Anzeigevorrichtung (10), wobei das Interface (12 die feldbusspezifischen Diagnoseinformationen zur Diagnose-Vorrichtung (11) leitet, und
- ein in der SPS befindliches Interface (2) enthält, wobei das Interface (2) in der SPS die feldbusspezifischen Diagnose-Informationen von der Feldbus-Anschaltbaugruppe (4) über den SPS-I/O Bus (6) oder SPS-Erweiterungsbus (6) zu einer externen Schnittstelle (7) der SPS (1) leitet, wobei eine Steuerungs-Anwendung unbeeinflusst bleibt.

2. Diagnose-Einrichtung nach Anspruch 1,
**dadurch gekennzeichnet,**
**dass** das in der SPS befindliches Interface (2) die Übermittlung der feldbusspezifischen Diagnose-Informationen von der Feldbus-Anschaltbaugruppe (4) zur Diagnose-Vorrichtung (11) unabhängig von der Programmierung einer Steuerungs-Anwendung (3) bereitstellt.

3. Diagnose-Einrichtung nach Anspruch 1 oder 2,
**dadurch gekennzeichnet,**
**dass** das Durchleiten der Diagnose-Informationen innerhalb der SPS (1) das Interface (2) der SPS (1) vornimmt, welches aus einer Software-programmierbaren Datenverarbeitungseinheit besteht.

4. Diagnose-Einrichtung nach Anspruch 1 oder 2,
**dadurch gekennzeichnet,**
**dass** das Durchleiten der Diagnose-Informationen innerhalb der SPS (1) das Interface (2) der SPS (1) vornimmt, welches aus einer für diese Anwendung erstellte Hardware-Komponente besteht.

5. Diagnose-Einrichtung nach einem der vorherigen Ansprüche
**dadurch gekennzeichnet,**
**dass** auf der Anzeigevorrichtung (10) ein Interface (12) die logische Aufteilung der zu übertragenden Informationen vornimmt, wobei die Diagnose-Informationen zur Diagnose-Vorrichtung (11) übermittelt werden und die für die Visualisierungs- oder Programmieranwendung vorgesehenen Informationen zur Visualisierungs- oder Programmieranwendung (13) übermittelt werden.

6. Diagnose-Einrichtung nach Anspruch 5,
**dadurch gekennzeichnet,**
**dass** die Diagnose-Vorrichtung (11) als Active-X Komponente in eine bestehende Anwendung (13) auf der Anzeigevorrichtung (10) eingebunden ist.

7. Diagnose-Einrichtung nach Anspruch 5 oder 6,
**dadurch gekennzeichnet,**
**dass** die Diagnose-Vorrichtung (11) die feldbusspezifischen Diagnose-Informationen aus der Visualisierungsanwendung heraus über eine standardisierte Schnittstelle für ActiveX-Komponenten erhält.

8. Diagnose-Einrichtung nach Anspruch 5 oder 6,
**dadurch gekennzeichnet,**
**dass** die bestehende Anwendung (13) auf der Anzeigevorrichtung (10) eine Visualisierungsanwendung (13) ist.

9. Diagnose-Einrichtung nach Anspruch 5 oder 6,
**dadurch gekennzeichnet,**
**dass** die bestehende Anwendung (13) auf der Anzeigevorrichtung (10) eine Programmierungsanwendung für die SPS (1) ist.

10. Diagnose-Einrichtung nach Anspruch 5 oder 6,
**dadurch gekennzeichnet,**
**dass** die bestehende Anwendung (13) auf der Anzeigevorrichtung (10) Konfigurationsanwendung oder Programmieranwendung für den Feldbus (27) ist.

## Claims

1. Diagnostic device for a field bus (27) that is connected to a field bus-interface module (4) via an interface (14, 8) on an SPS-I/O bus (6) found in an SPS (1), which outputs field bus-specific diagnostic information, such as, for example, signal transmission error, constantly upcoming interruption with location, circuit quality of LWL routes, as well as further diagnostic information that is relevant for the field bus for display on a display device (10),
**characterized in that**,
the diagnostic device includes
- a diagnostic apparatus (11) for the display of the field bus-specific diagnostic information on the display device (19),
- an interface (12) in the display device (10), whereby the interface (12) conducts the field bus-specific diagnostic information for the diagnostic apparatus (11), and
- an interface (2) located in the SPS, wherein the interface (2) in the SPS conducts the field bus-specific diagnostic information from the field bus interface module (4) via the SPS-I/O bus (6) or an SPS expansion bus (6) to an external interface (7) of the SPS (1), whereby a control application remains unaffected.

2. Diagnostic device according to claim 1, **characterized in that** the interface (2) located in the SPS prepares the transmission of the field bus-specific diagnostic information from the field bus interface module (4) to the diagnostic apparatus (11) independent from the programming of a control application (3).

3. Diagnostic device according to claim 1 or 2, **characterized in that** the conveyance of the diagnostic information within the SPS (2) assumes the interface (2) of the SPS (1), which comprises a software-programmable data processing unit.

4. Diagnostic device according to claim 1 or 2, **characterized in that** the conveyance of the diagnostic information within the SPS (1) assumes the interface (2) of the SPS (1), which comprises a hardware component prepared for this application.

5. Diagnostic device according to one of the preceding claims, **characterized in that** on the display device (10) an interface (12) assumes the logistic distribution of the information to be transmitted, whereby the diagnostic information is transmitted to the diagnostic apparatus (11) and the information provided for the visualization or programming application is transmitted to a visualization or programming application (13).

6. Diagnostic device according to claim 5, **characterized in that** the diagnostic apparatus (11) is integrated as active-X components in an existing application (13) on the display device (10).

7. Diagnostic device according to claim 5 or 6, **characterized in that** the diagnostic apparatus (11) contains the field bus-specific diagnostic information from the visualization application via a standardized interface for active-X components.

8. Diagnostic device according to claim 5 or 6, **characterized in that** the existing application (13) on the display device (10) is a visualization application (13).

9. Diagnostic device according to claim 5 or 6, **characterized in that** the existing application (13) on the display device (10) is a programming application for the SPS (1).

10. Diagnostic device according to claim 5 or 6, **characterized in that** the existing application (13) on the display device (10) is a configuration application or programming application for the field bus (27).

## Revendications

1. Système de diagnostic pour bus de champ (27) raccordé par une interface (14, 8) à un agrégat de mise en circuit de bus de champ (4) couplé à un bus CPE-I/O (6) se trouvant dans une CPE (1), lequel bus de champ édite des informations de diagnostic spécifiques au bus de champ comme par exemple des erreurs de transmission isolées, une interruption durable avec une indication du lieu, une qualité de conduction des lignes à fibres optiques ainsi que d'autres informations de diagnostic concernant le bus de champ pour affichage sur un dispositif d'affichage (10),
**caractérisé en ce que**
le système de diagnostic comporte
- un système de diagnostic (11) pour l'affichage des informations de diagnostic spécifiques au bus de champ sur le dispositif d'affichage (19),
- une interface (12) dans le dispositif d'affichage (10), l'interface (12) dirigeant les informations de diagnostic spécifiques au bus de champ vers le système de diagnostic (11) et
- une interface se trouvant dans la CPE (2), l'interface (2) de la CPE dirigeant les informations de diagnostic spécifiques au bus de champ de l'agrégat de mise en circuit du bus de champ (4) par l'intermédiaire du bus CPE-I/O (6) ou du bus de mise à niveau de CPE (6) vers une interface externe (7) de la CPE (1), tandis qu'une application de commande reste inchangée.

2. Dispositif de diagnostic selon la revendication 1,
**caractérisé en ce que**
l'interface (2) se trouvant dans la CPE assure la transmission des informations de diagnostic spécifiques au bus de champ de l'agrégat de mise en circuit de bus de champ (4) vers le système de diagnostic (11) indépendamment de la programmation d'une application de commande (3).

3. Dispositif de diagnostic selon la revendication 1 ou 2,
**caractérisé en ce que**
l'interface (2) de CPE (1) qui consiste en une unité de traitement de données programmable par logiciel assure la communication des informations de diagnostic à l'intérieur de la CPE (1).

4. Dispositif de diagnostic selon la revendication 1 ou 2,
**caractérisé en ce que**
l'interface (2) de CPE (1) qui consiste en un composant matériel élaboré pour cette application assure la transmission des informations de diagnostic à l'intérieur de la CPE (1).

5. Dispositif de diagnostic selon une des revendications précédentes,
**caractérisé en ce que**,
sur le dispositif d'affichage (10), une interface (12) effectue la répartition logique des informations à transmettre, les informations de diagnostic étant communiquées au système de diagnostic (11) et les informations prévues pour l'application de visualisation ou de programmation étant communiquées à l'application de visualisation ou de programmation (13).

6. Dispositif de diagnostic selon la revendication 5,
**caractérisé en ce que**
le système de diagnostic (11) est intégré sous forme de composant X actif dans une application existante (13) sur le dispositif d'affichage (10).

7. Dispositif de diagnostic selon la revendication 5 ou 6,
**caractérisé en ce que**
le système de diagnostic (11) reçoit les informations de diagnostic spécifiques au bus de champ en provenance de l'application de visualisation par l'intermédiaire d'une interface standardisée pour les composants X actifs.

8. Dispositif de diagnostic selon la revendication 5 ou 6,
**caractérisé en ce que**
l'application existante (13) sur le dispositif d'affichage (10) est une application de visualisation (13).

9. Dispositif de diagnostic selon la revendication 5 ou 6,
**caractérisé en ce que**
l'application existante (13) sur le dispositif d'affichage (10) est une application de programmation pour la CPE (1).

10. Dispositif de diagnostic selon la revendication 5 ou 6,
**caractérisé en ce que**
l'application existante (13) sur le dispositif d'affichage (10) est une application de configuration ou une application de programmation pour le bus de champ (27).
